# EUROPEAN PATENT APPLICATION

(11) **EP 2 843 533 A2**
(43) Date of publication of application: **04.03.2015**
(21) Application number: 14176434.0
(22) Date of filing: 10.07.2014
(51) Int. Cl.: G06F 3/0488, G06F 3/0483

(54) **Method of searching for a page in a three-dimensional manner in a portable device and a portable device for the same**

(30) Priority: 13.08.2013 KR 20130096138
(71) Applicant: Samsung Electronics Co., Ltd, Gyeonggi-do 443-742 (KR)
(72) Inventor: Kim, Myung-Sik, 443-742 Gyeonggi-do (KR); Kim, Joon-Oo, 443-742 Gyeonggi-do (KR); Lee, Seong-Oh, 443-742 Gyeonggi-do (KR); Jeong, Moon-Sik, 443-742 Gyeonggi-do (KR); Kim, Sun-Ah, 443-742 Gyeonggi-do (KR); Choi, Sung-Do, 443-742 Gyeonggi-do (KR)
(74) Representative: Grünecker, Kinkeldey, Stockmair & Schwanhäusser

(57) **Abstract**

A user interface for a movement between pages having a laminated structure in a portable device is provided. A method of searching for a page in a three dimensional manner in a portable device includes overlappingly displaying a plurality of pages in three dimensions; detecting a distance between the portable device and a user input means; sequentially moving and displaying the plurality of pages according to the detected distance; and when a movement of the user input means for selecting a page is detected, displaying the selected page. As a user brings a user input means close to a front surface of the portable device, the pages having the laminated structure are sequentially moved and displayed one by one, starting from a page displayed on the front. As a result, the user can identify the pages one by one and also intuitively select a desired page by making a gesture for selecting the page when the page is shown.

## Description

### BACKGROUND

### 1. Field of the Invention

The present invention generally relates to a method and an apparatus for searching for a page in a three-dimensional manner in a portable device.

### 2. Description of the Related Art

Recently, with the rapid development of communication technologies, functions of portable devices have been expanded, a communication speed and internal capacities have increased, and thus a volume of data which a user can access has increased. Accordingly, various User Interfaces (UIs) and various functions using the UIs have been provided. Further, portable devices provide various input methods of controlling the various functions.

In order to use the various functions or access data in a general portable device, the user may control key inputs of keys included in the portable device. Alternatively, when the portable device has a touch screen, the user may control the portable device through a touch input on a particular area of the touch screen.

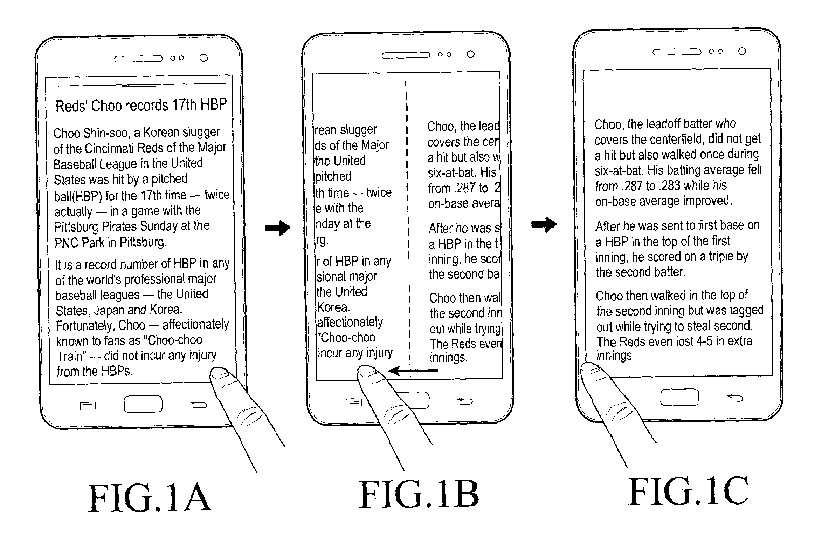

For example, as illustrated in FIGs. 1A to 1C, when the user views a page of a document in the portable device, the user can move between pages of the document only when the user inputs a key button having directivity or inputs a touch interaction of sweeping the touch screen in a left or a right direction. However, when a number of pages which the user desires to move is very large, scores of repetitive touch interactions are required, which is cumbersome for the user.

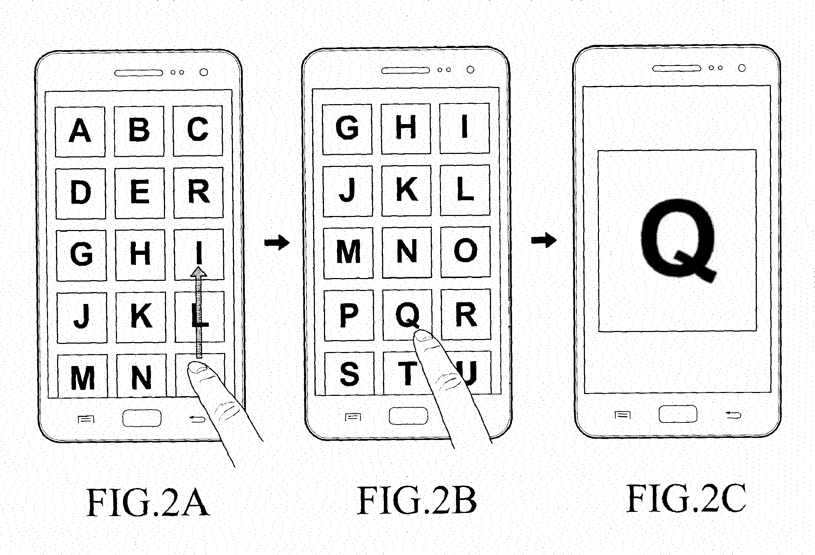

FIGs. 2A to 2C illustrate an example of screens in which thumbnails are arranged in rows and columns. When the user desires to view a thumbnail displayed on one screen currently shown, the user is required to move between thumbnails through a scroll action as illustrated in FIG. 2A. Then, when the user selects a desired thumbnail as illustrated in FIG. 2B, the selected thumbnail is displayed as illustrated in FIG. 2C. However, in such a thumbnail scheme, an image is displayed significantly smaller than an actual image, so that it may be difficult to accurately identify the image and also a separate enlarging or reducing process is required.

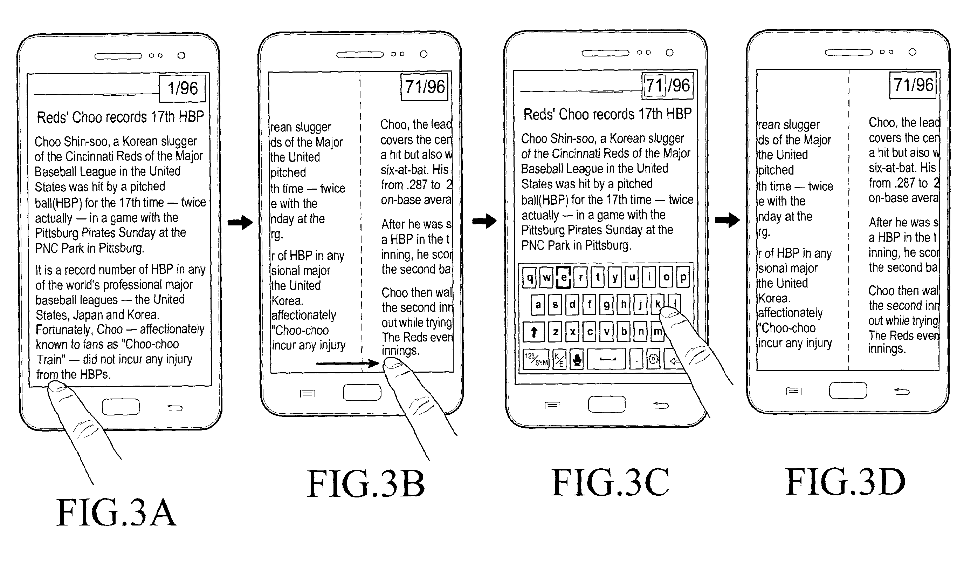

FIGs. 3A to 3D illustrate an example of inputting a number of a search page into an input window and moving to the page number. FIGs. 3A and 3B show a movement between pages made using a left and right touch interaction in the same manner as that of FIGs. 1A to 1C, FIG. 3C shows an input of a number of a search page, and FIG. 3D shows an output of a page screen corresponding to the number input in FIG. 3C. However, when the user does not accurately know a page to be searched for, the search page cannot be found and thus a repetitive search process is required.

As described above, in the related art, the portable device can be controlled by directly generating inputs in particular input means for controlling the portable device.

As described above, when the user continuously loads and views pages of a document, pictures, and the like through a simple way in which the portable device is controlled only through a uniform input method such as a key input or a touch input of the portable device, the user is required to continuously keep pressing or repeatedly press a key button and also repeatedly make a touch input.

Further, when a number of pages is very large, a continuous viewing method through the key button or the touch input has a limitation. As described above, in the related art, when the user desires to view a page in the portable device, the user cannot help using a user interface requiring a pressing action in hardware such as a keypad, a touch screen or the like. If continuous pages can be viewed through a user's intuitive action, user experience can be improved.

### SUMMARY

The present invention has been made to address the above problems and disadvantages, and to provide at least the advantages described below. Accordingly, an aspect of the present invention provides a method and a portable device in which continuous pages can be viewed by a user's intuitive action and user experience can be improved through a three dimensional display of a movement between the pages.

Another aspect of the present invention provides a method and portable device in which a quick and intuitive page search and selection can be made without a direct input into the portable device.

Another aspect of the present invention provides a method and portable device in which it is possible to efficiently use a screen of the portable device having a limited size by overlappingly displaying the pages in three dimensions and also easily identify the content displayed on each of the pages by displaying a selected page on a front surface.

In accordance with an aspect of the present invention, a method of searching for a page in a three dimensional manner in a portable device is provided. The method includes overlappingly displaying a plurality of pages in three dimensions; detecting a distance between the portable device and a user input means; sequentially moving and displaying the plurality of pages according to the detected distance; and when a movement of the user input means for selecting a page is detected, displaying the selected page.

In accordance with an aspect of the present invention, a portable device for performing a page search in a three dimensional manner is provided. The portable device includes a display unit that overlappingly displays a plurality of pages in three dimensions; a first sensor unit that detects a distance between the display unit and a user input means to control a movement between the plurality of pages; and a controller that controls to sequentially move the plurality of pages according to the detected distance and display the pages on the display unit, and, when a movement of the user input unit for selecting a page is detected, controls to display the selected page on the display unit.

### BRIEF DESCRIPTION OF THE DRAWINGS

The above and other aspects, features, and advantages of the present invention will be more apparent from the following detailed description taken in conjunction with the accompanying drawings, in which:
FIGs. 1A to 1C illustrate an example of screens showing a movement between pages according to a touch interaction of performing a sweep action according to the prior art;
FIGs. 2A to 2C illustrate an example of screens showing a movement between thumbnails through a scroll action according to the prior art;
FIGs. 3A to 3D illustrate an example of screens showing a movement between pages in a search page number input method according to the prior art;
FIG. 4 is a block diagram schematically illustrating a portable device according to an embodiment of the present invention;
FIG. 5 is a front perspective view of a portable device according to an embodiment of the present disclosure;
FIG. 6 is a rear perspective view of a portable terminal according to an embodiment of the present invention;
FIG. 7 is a flowchart illustrating an operation of a portable device to search for a page in a three dimensional manner according to an embodiment of the present invention;
FIGs. 8A and 8B illustrate an example of screens showing a movement between document pages according to an embodiment of the present invention;
FIGs. 9A and 9B illustrate an example of screens showing a movement between pictures according to an embodiment of the present invention;
FIGs. 10A and 10B illustrate an example of screens showing a movement between webpages according to an embodiment of the present invention;
FIGs. 11A and 11B illustrate an example of screens showing a movement between background images according to an embodiment of the present invention;
FIGs. 12A and 12B illustrate an example of screens showing a movement between work documents based on work dates according to an embodiment of the present invention;
FIG. 13 is a flowchart illustrating an operation of a portable device to search for a page in a three dimensional manner according to another embodiment of the present invention;
FIGs. 14 and 15A-15B illustrate examples for describing a page arrangement method based on each item according to another embodiment of the present invention; and
FIGs. 16A and 16B illustrate an example of screens describing a screen enlargement or reduction method according to another embodiment of the present invention.

### DETAILED DESCRIPTION OF EMBODIMENTS OF THE PRESENT INVENTION

Hereinafter, embodiments of the present invention will be described with reference to the accompanying drawings. However, the present invention is not restricted or limited by the embodiments. The same reference numerals represented in each of the drawings indicate the elements that perform substantially the same functions.

Although the terms including an ordinal number such as first, second, etc. can be used for describing various elements, the elements are not restricted by the terms. The terms are only used to distinguish one element from another element. For example, without departing from the scope of the present invention, a first structural element may be referred to as a second structural element. Similarly, the second structural element also may be referred to as the first structural element. The terms used in this application are for the purpose of describing particular embodiments only and are not intended to limit the invention. Singular forms are intended to include plural forms unless the context clearly indicates otherwise.

An embodiment of the present invention provides a user interface for a movement between pages having a laminated structure in a portable device. The embodiment of the present invention includes a process of measuring a distance between a portable device and a user input means, displaying sequential movements between pages having a laminated structure according to the measured distance, and displaying, when a movement of the user input means to select one page is detected, the selected page. According to the embodiment of the present invention, as the user brings the user input means close to a front surface of the portable device, pages having the laminated structure are sequentially moved and displayed from a page displayed at the very front, so that the user may identify the pages one by one and also intuitively select a desired page by making a gesture of selecting the page when the page appears.

The laminated structure of pages may also be called a stack of pages, more particularly a virtual stack of pages, and the (virtual) stacking direction is perpendicular to the front surface of the portable device. This direction is the third dimension in addition to the two dimensions of the front surface.

According to the present invention, the portable device may be a random device having a touch screen and the terminal device may be called a mobile terminal, a communication terminal, a portable communication terminal, a portable mobile terminal, and the like.

For example, the portable device may be a smart phone, a mobile phone, a game machine, a TeleVision (TV), a display device, a head unit for a vehicle, a notebook computer, a laptop computer, a tablet computer, a Personal Media Player (PMP), a Personal Digital Assistant (PDA), and the like. The portable device may be implemented as a pocket sized portable communication terminal which has a wireless communication function. Further, the portable device may be a flexible display device. The present invention can be applied to all types of devices if the devices have a screen displaying data and can detect a position and a distance of an input unit on the screen.

A representative configuration of the portable device corresponds to a configuration of a mobile phone, and some components of the representative configuration of the portable device may be omitted or changed as necessary.

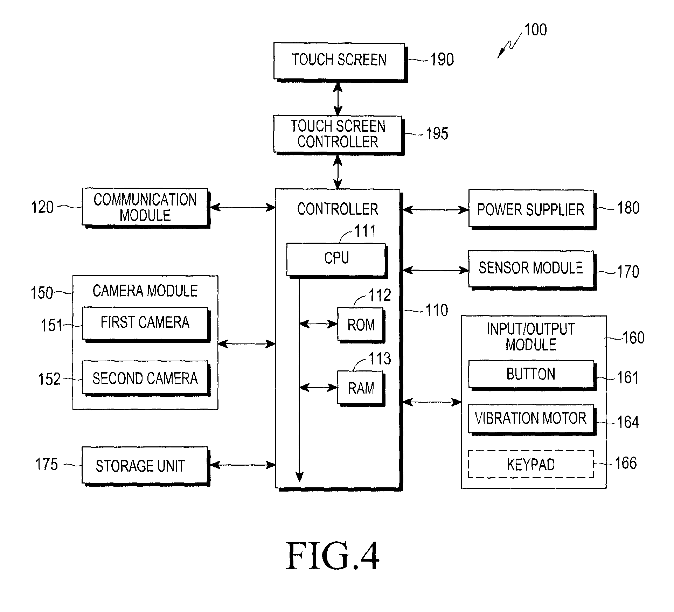

FIG. 4 is a block diagram schematically illustrating a portable device according to an embodiment of the present invention.

Referring to FIG. 4, a portable device 100 includes at least one touch screen 190 and at least one touch screen controller 195. In the present invention, the touch screen 190 and the touch screen controller 195 are examples of a display unit and a display controller, respectively. Also, the portable device 100 includes a controller 110, a communication module 120, a camera module 150, an input/output module 160, a sensor module 170, a storage unit 175, and a power supplier 180.

The controller 110 includes a Central Processing Unit (CPU) 111, a Read Only Memory (ROM) 112 in which a control program for a control of the portable device 100 is stored, and a Random Access Memory (RAM) 113 which stores signals or data input from outside of the portable device 100, or is used as a storage region for operations performed by the portable device 100. The CPU 111, the ROM 112, and the RAM 113 may be connected to each other through an internal bus.

The controller 110 controls the communication module 120, the camera module 150, the input/output module 160, the sensor module 170, the storage unit 175, the power supplier 180, the touch screen 190, and the touch screen controller 195.

The communication module 120 includes at least one of a mobile communication module, a wireless LAN module, and a short-range communication module. The communication module 120 transmits/receives a radio signal to/from an external storage medium, such as a server, and the like, an external electronic device, another portable terminal, and the like according to a control of the controller 110.

The camera module 150 has an image sensor and includes at least one of a first camera 151 and a second camera 152 for photographing a still image or a video according to a control of the controller 110. The first camera 151 may be disposed on a front surface of the portable device 100, and the second camera 152 may be disposed on a rear surface of the portable device 100.

The camera module 150 may further include a third camera. In this case, the third camera may be disposed close to the first camera 151 or the second camera 152 to photograph a three dimensional still image or a three dimensional video.

Each of the first and second cameras 151 and 152 may include a lens system, an image sensor, and the like. Each of the first and second cameras 151 and 152 converts an optical signal input through a lens system to an electrical image signal and outputs the converted electrical image signal to the controller 110. Then, the user may photograph a video or a still image through the first and second cameras 151 and 152.

The input/output module 160 includes at least one of at least one button 161, at least one vibration device 164, and a keypad 166. The input/output module 160 is not limited thereto and may be provided to control a movement of a cursor on the touch screen 190 by a mouse, trackball, a joystick, or cursor direction keys as well as at least one microphone, at least one speaker, and an earphone connecting jack.

The button 161 may be formed on a front surface, a side surface, or a back surface of a housing (or a case) of the portable device 100, and may include at least one of a power/lock button, a volume button, a menu button, a home button, a back button, and a search button.

The vibration device 164 converts an electrical signal to a mechanical vibration under a control of the controller 110. For example, when the portable device 100 in a vibration mode receives a voice or video call from another device, the vibration device 164 operates. One or more vibration devices may be arranged in the housing of the portable device 100. The vibration device 164 may operate in response to a user's input through the touch screen 190, the input/output module 160, or other input means.

The keypad 166 receives a key input from the user in order to control the portable device 100. The keypad 166 includes a physical keypad formed in the portable device 100 or a virtual keypad displayed on the touch screen 190. The physical keypad arranged on the portable device 100 may be excluded according to a performance or a structure of the portable device 100.

The sensor module 170 includes at least one sensor for detecting an ambient situation of the portable device 100. For example, the sensor module 170 may include at least one of a proximity sensor for detecting whether the user approaches the portable device 100, an illumination sensor for detecting an amount of ambient light of the portable device 100, a motion sensor for detecting a motion (for example, rotation, acceleration, or vibration of the portable device 100) of the portable device 100, a geo-magnetic sensor for detecting a point of the compass by using the Earth's magnetic field, a gravity sensor for detecting a gravity action direction, and an altimeter for measuring an atmospheric pressure to detect an altitude. Further, the camera module 150 for photographing the user may be included in the sensor module 170. A sensor which has not been mentioned above may be added or some of the sensors included in the sensor module 170 may be omitted according to a perfonnance of the portable device 100.

The sensor module 170 may include a depth sensor for obtaining a physical distance from the portable device 100 to the user input means according to an embodiment of the present invention. That is, in order to obtain depth information, a depth sensor in a Time Of Flight (TOF) type may be used. For example, a distance sensing sensor using light, a radio wave, a sound wave, and the like can be used. Such a sensor measures a distance by using a change in reflected light, radio waves, and sound waves, a change in capacitance according to an approach, or a change in an angle and a time difference of a reflected wave. The depth sensor according to an embodiment of the present invention should be understood also as a distance sensor since the depth sensor serves to measure a distance between the portable device and the user input means.

In the present invention, the user input means includes the user's fingers, a stylus pen, an electronic pen, and the like.

The distance sensor may be disposed on a front surface of the portable device 100 and may include an infrared light source and an infrared camera. In this case, the infrared light source outputs an infrared ray and the infrared camera detects an infrared ray reflected from an object. For example, the infrared light source may include an LED array in a matrix structure. The infrared camera may include a filter that passes an infrared ray and blocks a waveform band except for the infrared ray, a lens system that focuses the infrared ray having passed through the filter, and an image sensor that converts an optical image formed by the lens system to an electrical image signal and outputs the converted electrical image signal. For example, the image sensor may include a photo diode (PD) array in a matrix structure.

In addition to the above types of sensors, other techniques may be used to measure and/or calculate depth information.

For example, a sensor that senses a change in a size of an object when the object approaches may be used. In general, since a size of the object becomes larger as the object approaches, a change in a distance may be calculated through the change in size. To this end, the camera module 150 may be used as a sensor for measuring a depth.

Further, in the present invention, the above sensors may be used independently from each other or a combination of two or more sensors may be used in consideration of accuracy of a sensor sensing a change in a vertical distance and convenience of a sensor sensing a change in a shape in sensing a change on a horizontal plane. As described above, when a combination of two or more sensors is used, a more accurate result can be obtained with respect to an approach of an input means, a height, a change in the height, a horizontal position, and a horizontal change.

Meanwhile, since the first camera 151 is disposed on the front surface of the portable device 100, the first camera 151 outputs an image generated by photographing a user input means, such as a user's hand, a stylus pen or the like. Accordingly, the controller 110 may calculate a distance change through a change of a size of the photographed object based on the image generated by photographing the user input means.

Although an embodiment of the present invention describes, as an example, sequential movements of pages according to a distance from the front surface of the touch screen 190 to the user input means, the sensor module 170 may be disposed on the back surface or a distance from the back surface to the user input means may be used for the movements of the pages through the second camera 152. For example, the front surface of the touch screen 190 may be configured as a reference point, or a position spaced from the back surface of the touch screen 190 by a predetermined distance may be configured as the reference point. Accordingly, the controller 110 may measure a distance from the front surface of the touch screen 190 to the user input means or may be configured to measure a distance within a predetermined range beyond the touch screen 190.

When a display unit is implemented by a transparent display, the portable device displays a movement of a hand moving behind the portable device 100, so that the user can view the movement of the hand.

Further, according to an embodiment of the present disclosure, in order to detect a user input for selecting a page, an object, and the like on the touch screen 190, the portable device 100 further includes a sensor that detects a position of the user input means. To this end, a distance sensor array may be used, and the distance sensor array detects a horizontal movement of the user input means and measures a position.

According to an embodiment of the present invention, in order to detect the horizontal movement of the user input means, a minimum of four distance sensor arrays which are disposed on a front surface of the portable device 100 are required. A predetermined position on the touch screen 190 is set as a center to detect the horizontal movement. For example, when a finger tip is a reference point, a position projected on a horizontal plane of an end of an object determined as the finger is determined as a position on the horizontal plane.

Further, it is possible to detect a position and a movement in a horizontal direction from an image photographed through the first camera 151 or the second camera 152.

According to an embodiment of the present invention, a distance moved in a vertical direction from the user input means and a distance moved in a horizontal direction from the user input means may be measured individually using the above sensors and the measurement can be made through a combination of the sensors. For example, a combination of the sensors can be variously made such as a method of using the depth sensor and the camera, a method of using only the camera, and a method of using only the distance sensor array, and accordingly, an approach of the user input means to the portable device 100, a distance, a distance change, a horizontal position and a horizontal change can be detected.

The storage unit 175 stores a signal or data input/output according to an operation of the communication module 120, the camera module 150, the input/output module 160, the sensor module 170, or the touch screen 190 according to a control of the controller 110. The storage unit 175 stores a control program and applications for controlling the portable device 100 or the controller 110.

The term "storage unit" is used to refer to a predetermined data storing device such as the storage unit 175, the ROM 112 in the controller 110, the RAM 113 or a memory card (for example, an SD card, a memory stick or the like) inserted into the portable device 100. The storage unit 175 may also include a non-volatile memory, a volatile memory, a Hard Disk Drive (HDD), or a Solid State Drive (SSD).

The storage unit 175 is a machine (for example, computer)-readable medium, and the phrase "machine-readable medium" may be defined as a medium for providing data to the machine so that the machine performs a specific function. The storage unit 175 may include a non-volatile medium and a volatile medium. All of these media should be of a tangible type that allows instructions transferred by the media to be detected by a physical instrument in which the machine reads the instructions into the physical instrument.

The machine-readable medium includes at least one of a floppy disk, a flexible disk, a hard disk, a magnetic tape, a Compact Disc Read-Only Memory (CD-ROM), an optical disk, a punch card, a paper tape, a Random Access Memory (RAM), a Programmable Read-Only Memory (PROM), an Erasable PROM (EPROM), and a flash-EPROM, but is not limited thereto.

The power supplier 180 supplies power to one or more batteries which are disposed in the housing of the portable device 100 under a control of the controller 110. The one or more batteries supply power to the portable terminal 100. Further, the power supplier 180 may supply power input from an external power source through a wired cable connected to the connector 165 to the electronic device 100.

The portable device 100 may include one or more touch screens 190 providing user graphical interfaces corresponding to various services (for example, a phone call, data transmission, broadcasting, and photography) to the user.

The touch screen 190 displays user interfaces corresponding to various services (for example, a call, data transmission, broadcasting, photography, and the like) to the user based on an Operation System (OS) of the portable device 100. The touch screen 190 outputs an analog signal corresponding to at least one user input which is input to the user graphical interface to the touch screen controller 195. The touch screen 190 receives at least one user input through a user's body (for example, the fingers). The touch screen 190 may receive successive motions of one touch. The touch screen 190 outputs a signal corresponding to the successive motions of the input touch to the touch screen controller 195.

In an embodiment of the present invention, the touch is not limited to a contact between the touch screen 190 and the user input means such as a finger and the like and may include a non-contact (for example, a case where the user input means is located within a recognition distance (for example, 1 cm) which can detect the user input means without a direct contact with the touch screen 190).

The touch screen 190 may be implemented in, for example, a capacitive type, an infrared type, an acoustic wave type, or a combination thereof.

The touch screen controller 195 converts an analog signal input from the touch screen 190 to a digital signal and transmits the converted digital signal to the controller 110. The controller 110 controls a user interface displayed on the touch screen 190 by using the digital signal received from the touch screen controller 195. For example, the controller 110 may allow a short-cut icon or an object displayed on the touch screen 190 to be selected or executed in response to a direct touch event or a hovering event. Further, the touch screen controller 195 may be integrated into the controller 110.

The touch screen controller 195 may identify a hovering interval or distance as well as a position of the user input by detecting a value (for example, a current value or the like) output through the touch screen 190, and convert the identified distance value to a digital signal (for example, a Z coordinate), and provide the converted digital signal to the controller 110. Further, the controller 110 may detect various user inputs received through the camera module 150, the input/output module 160, and the sensor module 170 as well as the touch screen 190. The user input may include various types of pieces of information input into the portable device 100 such as a gesture, a voice, a movement of a pupil, a biometric signal and the like of the user as well as the touch. The controller 110 may control a predetermined operation or function corresponding to the detected user input to be performed within the portable device 100.

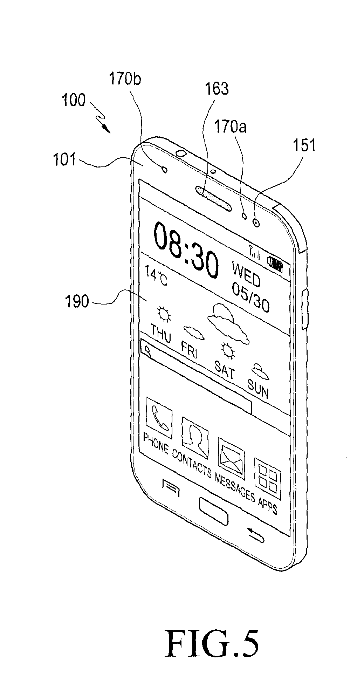

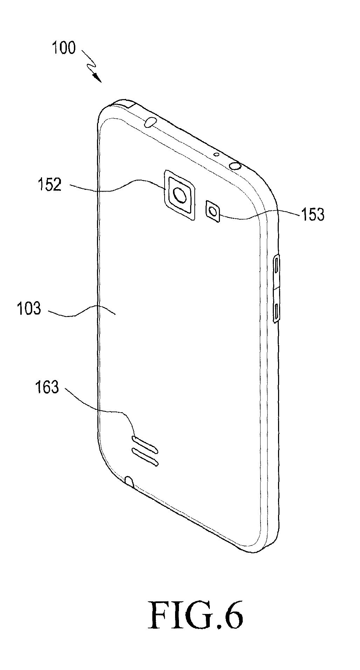

FIG. 5 is a front perspective view of the portable device, and FIG. 6 is a rear perspective view of the portable device, according to an embodiment of the present invention.

Referring to FIGs. 5 and 6, the touch screen 190 is disposed at a center of the front surface of the portable device 100. The touch screen 190 may have a large size to occupy most of the front surface 101 of the portable device 100.

The portable device 100 has the first camera 151, an illumination sensor 170a and a proximity sensor 170b which are arranged on an edge of the front surface 101 of the portable device 100. The second camera 152, a flash 153, and a speaker 163 are disposed on a rear surface 103 of the portable device 100.

In an embodiment of the present invention, a rear direction corresponds to a direction facing the rear surface of the portable device 100 and a front direction corresponds to a direction facing the front surface of the portable device 100. The front direction is one direction and the rear direction is a direction opposite to the one direction.

In an embodiment of the present invention, a method of showing a movement between pages according to a detection of a distance between the portable device and the user input means is provided, and the controller 110 controls other components within the portable device 100 to perform a page searching method in a three dimensional manner.

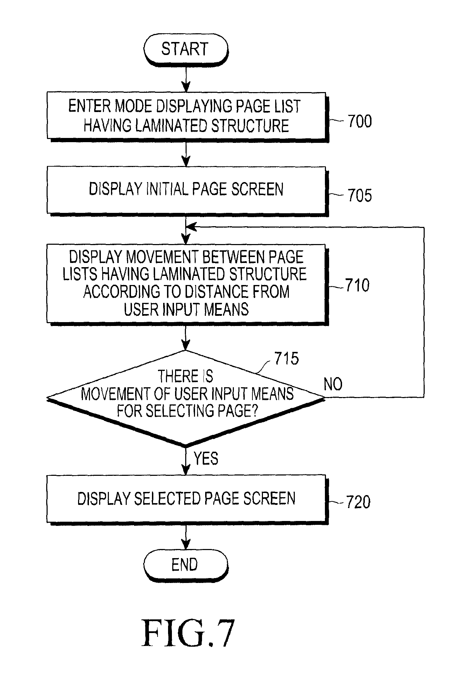

FIG. 7 is a flowchart illustrating an operation of the portable device to search for a page in a three dimensional manner according to an embodiment of the present invention.

Referring to FIG. 7, when an application for displaying a page list having a laminated structure is executed, the portable device enters a mode displaying the page list having the laminated structure in step 700. The controller 110 displays an initial page of the page list or a screen displayed in a mode entry in step 705. The page list displays objects which can be overlappingly displayed according to each page and a plurality of selectable items. The object includes, for example, a picture, an image, a webpage, a document, an email, a scheduler, a music album, a plurality of OSs, a work document based on a work date, and the like, and all objects which can be overlappingly displayed for each page. Further, the plurality of selectable items are a reference for re-arranging the pages, and may be displayed in a form including, for example, at least one of an image and a text. The image may be a character, a symbol, and the like for easily identifying the item, or may include a title describing a characteristic of the item.

Subsequently, the controller 110 measures a distance from the user input means through the sensor module 170 and displays a movement between page lists having the laminated structure according to the measured distance in step 710. At this time, the movement between the pages according to an embodiment of the present invention is displayed in a three dimensional manner. As the distance between the user input means and the touch screen 190 becomes shorter, pages are sequentially changed and displayed from a currently displayed page. That is, a navigation operation between page lists may be moved and displayed on the front by using a three dimensional visual effect or animation according to a distance from the user input means. At this time, the remaining pages except for the page displayed on the front are displayed partially overlappingly with the page displayed on the front for more easy browsing by showing pages before and after the page displayed on the front. As described above, the distance from the user input means is used to set a movement to a next page from one page.

The page movement according to the distance can be made in various ways according to distance measurement sensitivity of the distance sensor as well as the distance change. For example, when the distance from the display unit to a finger or a stylus pen is divided into three stages, the page is moved backwardly in a first stage, a movement of the page is stopped in a second stage, and the page is moved forwardly in a third stage. Similarly, when the distance is divided into five stages, the page is quickly moved backwardly in a first stage, the page is moved backwardly in a second stage, the movement of the page is stopped in a third stage, the page is moved forwardly in a fourth stage, and the page is quickly moved forwardly in a fifth stage.

Subsequently, the controller 110 determines whether there is a movement of the user input means for selecting a page in step 715. If there is no movement, the process returns to step 710. In the present invention, a movement of the user input means for selecting a page refers to a horizontal movement of the user input means parallel to the front surface of the portable device. In addition, the user may select a page by using a predetermined gesture, such as an action of turning a hand or a making a gesture by using a finger. At this time, it is preferable that the movement of the user input means is determined in a state where the horizontal movement of the user input means is stopped for a predetermined time. Then, the controller 110 displays a selected page screen in step 720.

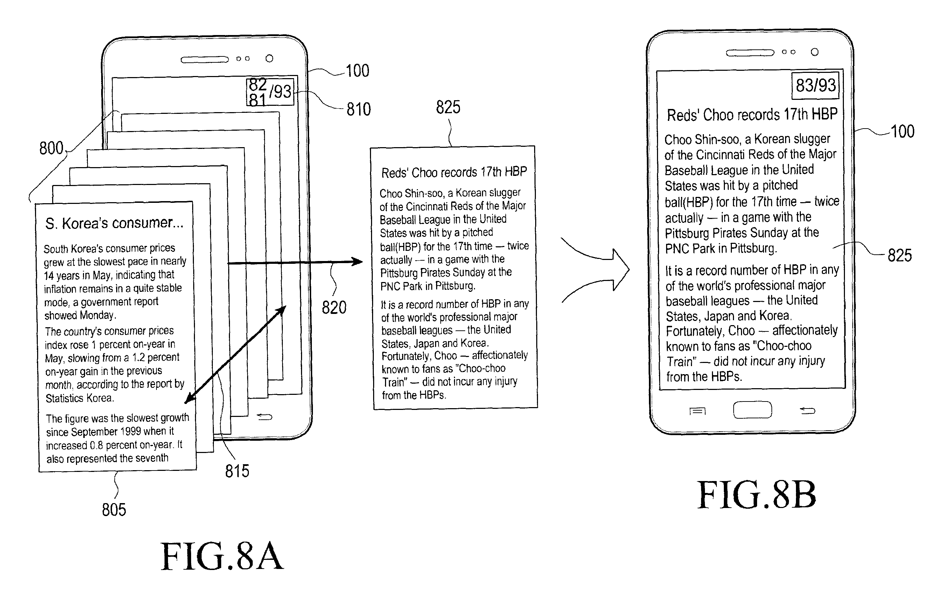

FIGs. 8A and 8B illustrate an example of screens showing a movement between document pages according to an embodiment of the present invention.

Referring to FIG. 8A, a movement between pages included in a document page list having a laminated structure 800 is illustrated. Pages are sequentially changed and displayed according to a vertical movement 815 of the user input means, starting from an initial document page 805. At this time, when the user input means moves toward the front surface of the portable device 100, the pages are changed and displayed from a front page to a back page. When the user input means moves from the front surface of the portable device 100 to the user, the pages are changed and displayed from a back page to a front page.

At this time, an area 810 showing a number of total document pages and a number of a current page may be located on the display screen. When a horizontal movement 820 of the user input unit is detected in such a state, a current page 825 may be displayed as illustrated in FIG. 8B. The current page 825 is a page corresponding to a position where a vertical movement of the user input means is stopped.

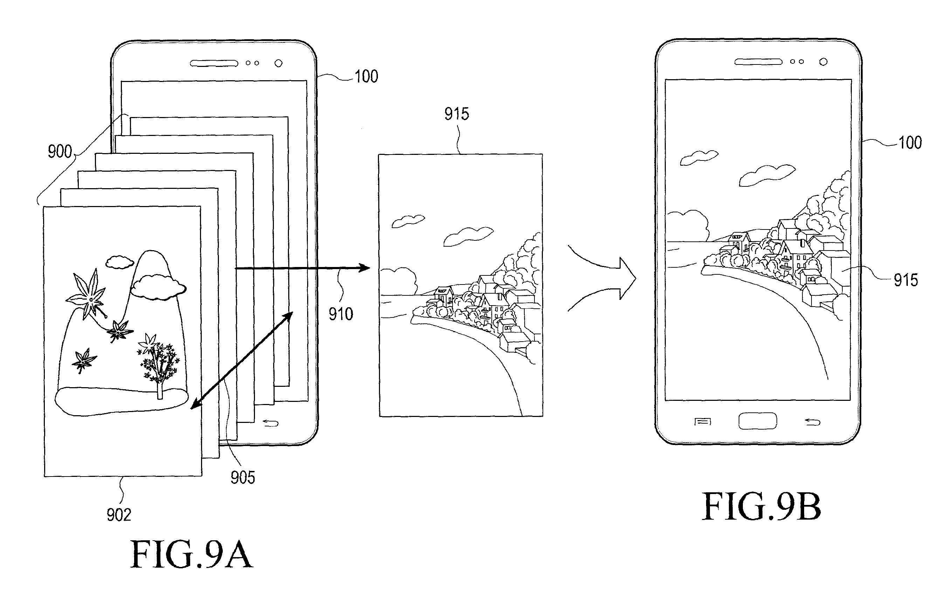

FIGs. 9A and 9B illustrate an example of screens showing a movement between pictures according to an embodiment of the present invention. FIG. 9A illustrates that a picture 902 is displayed on an initial page screen having a laminated structure 900. When a horizontal movement 910 is made after a vertical movement 905, a selected picture page 915 may be displayed as illustrated in FIG. 9B.

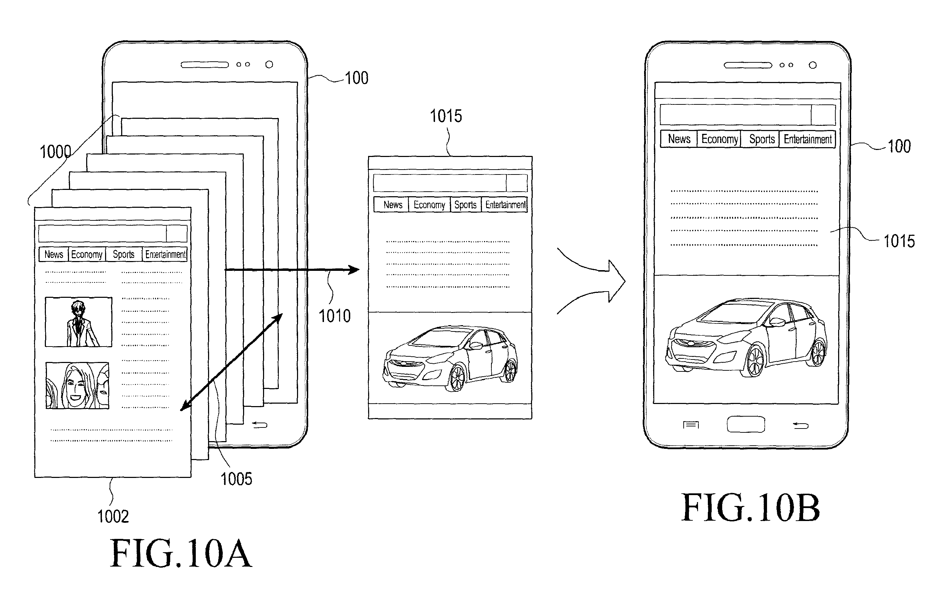

FIGs. 10A and 10B illustrate an example of screens showing a movement between webpages according to an embodiment of the present invention. In FIG. 10A, when the user opens a plurality of webpages 1000 on the screen, the user selects a webpage 1015 through a vertical movement 1005 and a horizontal movement 1010 of the user input means between the webpages to display webpage 1015 in FIG. 10B.

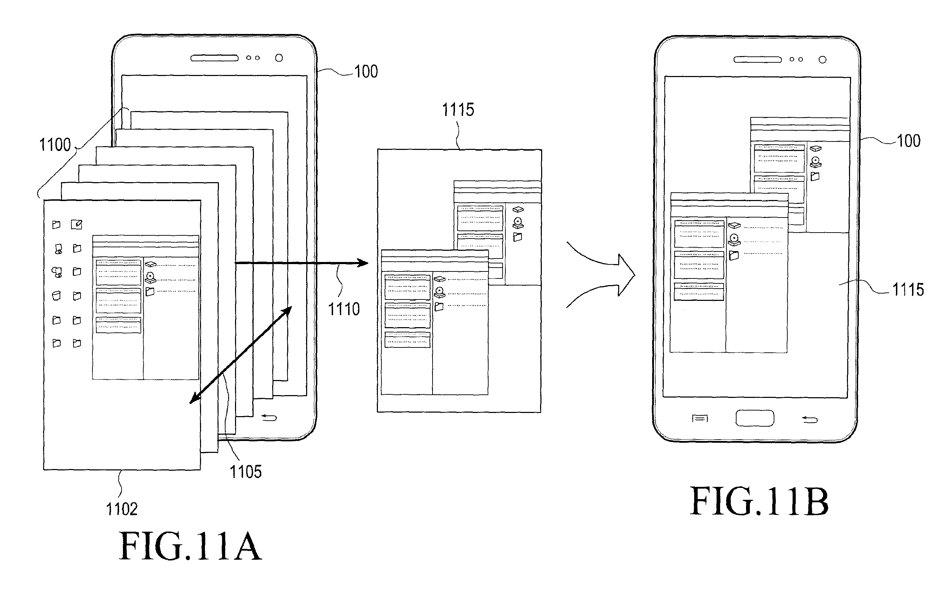

FIGs. 11A and 11B illustrate an example of screens showing a movement between background images according to an embodiment of the present invention. When a plurality of background images are used, such as in a case where an operating system designates and uses a plurality of background images or one portable device installs and uses a plurality of operating systems, the present invention is applied to a movement between background images 1100. In FIG. 11A, when the user opens a plurality of background images on the screen, the user selects a background image 1115 through a vertical movement 1105 and a horizontal movement 1110 of the user input means to display the background image 1115 in FIG. 11B.

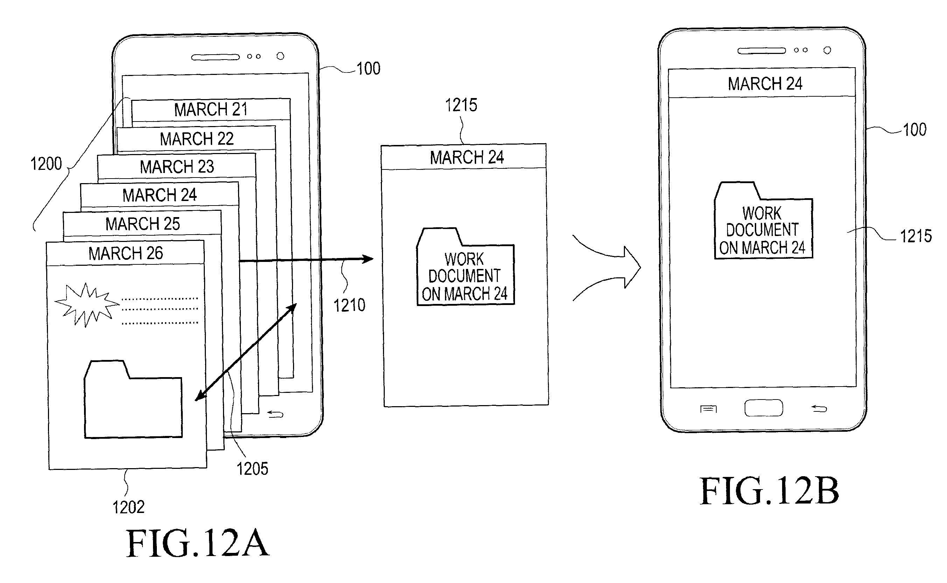

Meanwhile, in the above description, only the movement between pages according to the distance from the user input means is illustrated, but the distance from the user input means may be allocated to a time axis and used to indicate a time change as illustrated in FIG. 12.

FIGs. 12A and 12B illustrate an example of screens showing a movement between work documents based on work dates according to an embodiment of the present invention.

FIG. 12A illustrates an example of work documents based on work dates thereof having a laminated structure 1200 overlappingly displayed. In this case, as the user brings the user input means close to the work documents, the work documents are sequentially displayed from a current work document to a past work document. In contrast, as the user input means are spaced apart from the work documents, the work documents are sequentially displayed from a past work document to a current work document. That is, a vertical movement 1205 of the user input means is used for controlling a movement between the work documents based on work dates thereof and a horizontal movement 1210 of the user input means is used for selecting a work document 1215 of a work date which the use desires. Accordingly, as illustrated in FIG. 12B, a screen corresponding to the work document 1215 of the selected work date may be displayed. At this time, an operation related to the work document of the work date corresponding to the selected page may be performed. Accordingly, an operation of returning to the work document of the work date may be performed and simultaneously an indication indicating that the returning operation is being performed may be displayed on the screen.

In the movement between pages, times, and pictures according to the vertical movement, the vertical movement direction and forward and backward directions may be opposite to those in the above description. For example, when the user input means moves toward the front surface of the portable device 100, the pages can be changed and displayed from a back page to a front page.

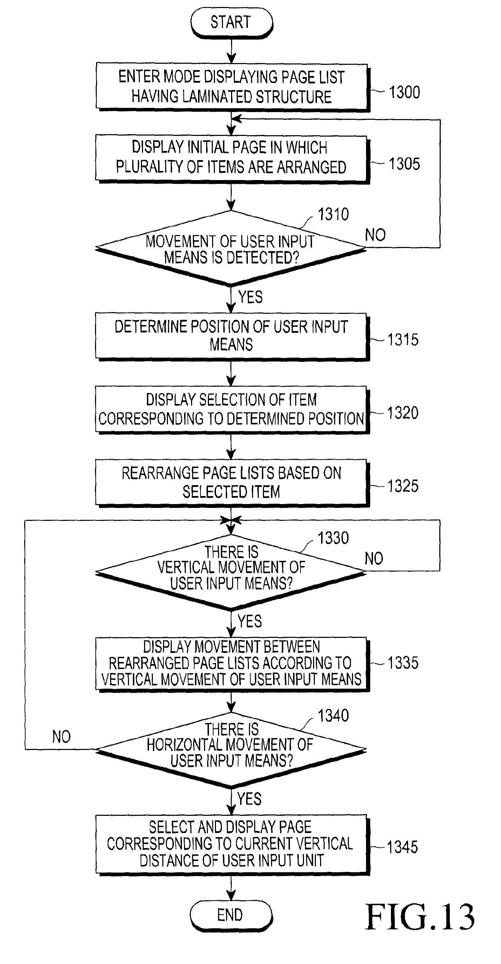

FIG. 13 is a flowchart illustrating an operation of the portable device to search for a page in a three dimensional manner according to another embodiment of the present invention.

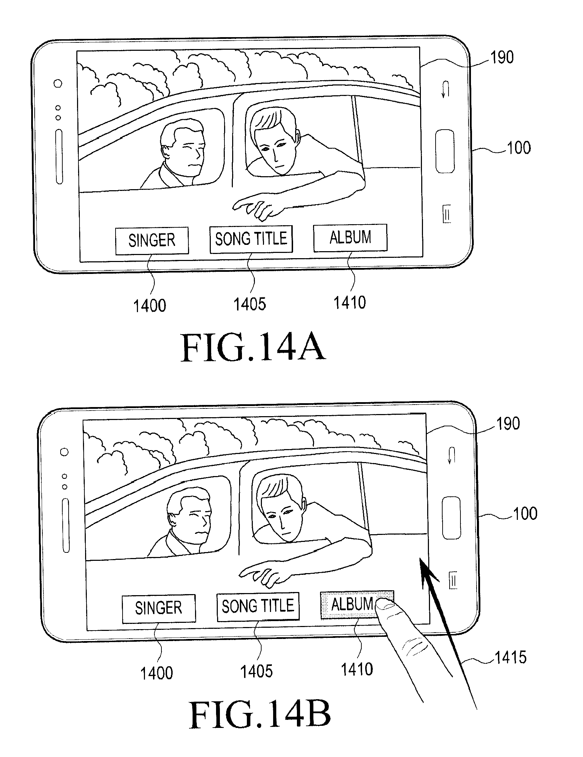

Referring to FIG. 13, when the portable device enters a mode displaying a page list having a laminated structure in step 1300, the controller 110 displays an initial page in which a plurality of items are arranged in step 1305. The initial page is illustrated in FIG. 14A.

FIG. 14A illustrates the touch screen 190 displaying a music album page in which items such as a singer 1400, a song title 1405, and an album 1410 are arranged. In FIG. 14A, although the singer, the song title, and the album are illustrated as items in a case of the music album page, various items such as a date, a play list, and the like may be applied for rearrangement between page lists. For example, a number of a page, a generation time, and a name may be configured as an arrangement reference. In a case of a picture, a photographed person may be used as an arrangement reference. As described above, the arrangement reference may be displayed on a predetermined area of the page screen.

The user may move the user input means in a vertical direction 1415 to select one item 1410 as illustrated in FIG. 14B. To this end, the controller 110 determines whether a movement of the user input means is detected in step 1310. When the movement of the user input means is not detected, the process returns to step 1305. When the movement of the user input means is detected, the controller 110 determines a position of the user input means in step 1315. At this time, the determination of the position may use a direct touch method or an indirect touch method such as a hovering. Alternatively, when the user input means moves in a vertical direction, selectable items may be displayed on a two dimensional position projected on the display unit.

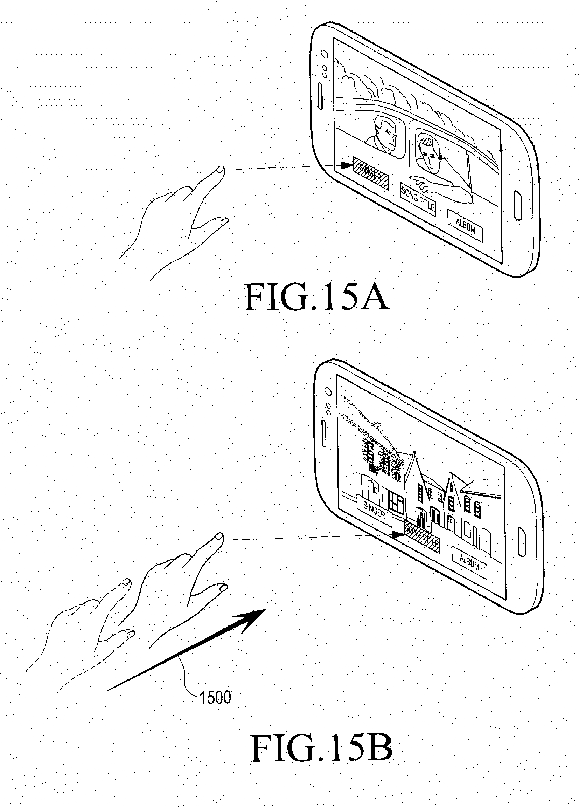

FIGs. 15A and 15B illustrate an example of differently displaying selectable items according to a vertical movement 1500 of the user input means. As described above, the controller 110 displays a selection of an item corresponding to the determined position in step 1320. Then, the controller 110 may select the item through a gesture of the user input means for selecting the item. When one item is selected, the controller 110 rearranges the page lists based on the selected item in step 1325.

Subsequently, the controller 110 determines whether there is a vertical movement of the user input means for moving between the rearranged page lists in step 1330. When there is vertical movement, the controller 110 displays a movement between the rearranged page lists according to the vertical movement of the user input means in step 1335. Then, the controller 110 determines whether there is a horizontal movement of the user input means in step 1340. When the horizontal movement of the user input means is detected, the controller 110 selects and displays a page corresponding to a current vertical distance of the user input means in step 1345. When there is no horizontal movement detected, the process returns to step 1330.

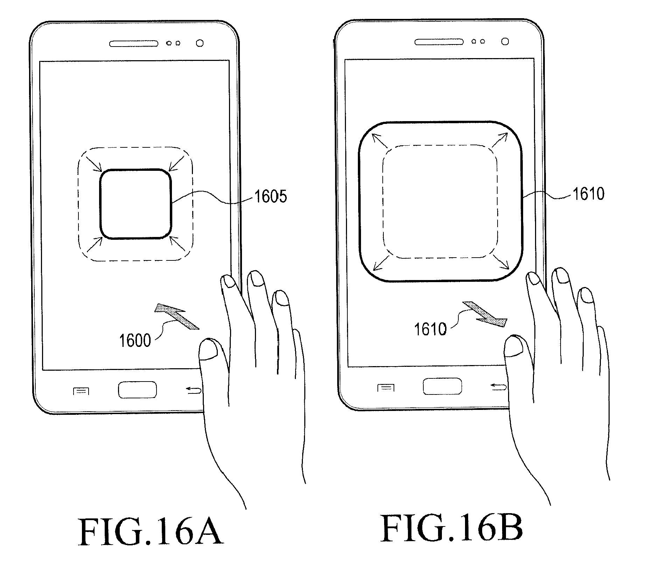

FIGs. 16A and 16B illustrate an example of screens showing enlargement and reduction of the screen. Referring to FIG. 16A, a distance from the user input means may be used to control the portable device. For example, as the user brings the user input means in a direction 1600 toward the front surface of the portable device 100 to be close to the portable device 100, an object 1605 displayed on the screen may be reduced and displayed as illustrated in FIG. 16A. As the user input means becomes spaced apart from the front surface of the portable device 100 in a direction 1610, an object 1615 displayed on the screen may be enlarged and displayed as illustrated in FIG. 16B.

Further, in the above described examples, although a representative example of the display unit displaying the screen corresponds to the touch screen, the display unit may use a general display unit such as a Liquid Crystal Display (LCD, Organic Light Emitting Diodes (OLEDs), an LED, and the like which has no touch detection function instead of the touch screen.

It may be appreciated that the embodiments of the present invention may be implemented in software, hardware, or a combination thereof. Any such software may be stored, for example, in a volatile or non-volatile storage device such as a ROM, a memory such as a RAM, a memory chip, a memory device, or an IC, or a optical or magnetic recordable and machine (e.g., computer) readable medium such as a CD, a DVD, a magnetic disk, or a magnetic tape, regardless of its ability to be erased or its ability to be re-recorded. It is appreciated that the storage unit included in the electronic device is one example of the machine-readable storage media suitable for storing a program or programs including commands for implementing various embodiments of the present invention. Accordingly, the present invention includes a program that includes a code for implementing an apparatus or a method defined in any claim in the present specification and a machine-readable storage medium that stores such a program. Further, the program may be electronically transferred by a predetermined medium such as a communication signal transferred through a wired or wireless connection, and the present invention appropriately includes equivalents of the program.

Further, the device can receive the program from a program providing apparatus connected to the device wirelessly or through a wire and store the received program. A program providing apparatus may include a memory for storing a program including instructions for performing the page search method in the three dimensional manner, a communication unit for performing wired or wireless communication with the portable device, and a controller for transmitting the corresponding program to the portable device automatically or according to a request of the portable device.

Although specific embodiments are described in the above description of the present invention, various modifications can be made without departing from the scope of the present invention. Accordingly, the scope of the present invention shall not be determined by the above-described embodiments, and is to be determined by the following claims.

## Claims

1. A method of searching for a page in a three dimensional manner in a portable device, the method comprising:
overlappingly displaying a plurality of pages in three dimensions;
detecting a distance between the portable device and a user input means;
sequentially moving and displaying the plurality of pages according to the detected distance; and
when a movement of the user input means for selecting a page is detected, displaying the selected page.

2. The method of claim 1, further comprising displaying one page corresponding to the detected distance on a front surface among the plurality of pages during sequentially moving and displaying the plurality of pages.

3. The method of claim 1 or 2, wherein at least one of objects which can be overlappingly displayed according to an order of pages and a plurality of selectable items is displayed in the plurality of pages and wherein the objects are related to one of a picture, an image, a webpage, a document, an email, a scheduler, a music album, a plurality of Operating Systems (OSs), and a work document based on a work date.

4. The method of claim 3, further comprising, when the plurality of pages correspond to the work document based on the work date, displaying the selected page and then performing an operation related to a work document of a work date corresponding to the selected page and wherein the operation related to the work document of the work date corresponding to the selected page is an operation of returning to the work document of the work date.

5. The method of claim 3 or 4, further comprising:
selecting an item corresponding to a position of the user input means in a state where the page is displayed; and
rearranging and displaying the plurality of pages based on the selected item.

6. The method of any one of claims 3 to 5, wherein the plurality of selectable items displayed include at least one of a date and a title.

7. The method of any one of claims 1 to 6, wherein the movement of the user input means for selecting the page is a horizontal movement of the user input means parallel to a front surface of the portable device.

8. The method of any one of claims 1 to 6, wherein the movement of the user input means for selecting the page corresponds to a preset gesture.

9. A portable device for performing a page search in a three dimensional manner, the portable device comprising:
a display unit configured to overlappingly display a plurality of pages in three dimensions;
a first sensor unit configured to detect a distance between the display unit and a user input means to control a movement between the plurality of pages; and
a controller configured to control to sequentially move the plurality of pages according to the detected distance and to display the pages on the display unit, and, when a movement of the user input unit for selecting a page is detected, to control to display the selected page on the display unit.

10. The portable device of claim 9, wherein the controller display is configured to one page corresponding to the detected distance on a front surface among the plurality of pages while the plurality of pages are sequentially moved and displayed.

11. The portable device of claim 9 or 10, wherein at least one of objects which can be overlappingly displayed according to an order of pages and a plurality of selectable items is displayed in the plurality of pages and wherein the objects are related to one of a picture, an image, a webpage, a document, an email, a scheduler, a music album, a plurality of Operating Systems (OSs), and a work document based on a work date.

12. The portable device of claim 11, wherein, when the plurality of pages correspond to the work document based on the work date, the controller is configured to display the selected page and then to perform an operation related to a work document of a work date corresponding to the selected page and wherein the operation related to the work document of the work date corresponding to the selected page is an operation of returning to the work document of the work date.

13. The portable device of claim 11 or 12, wherein the controller is configured to select an item corresponding to a position of the user input means in a state where the page is displayed, and to rearrange and display the plurality of pages based on the selected item.

14. The portable device of any one of claims 11 to 13, wherein the plurality of selectable items displayed include at least one of a date and a title.

15. The portable device of any one of claims 9 to 14, further comprising a second sensor unit configured to detect a horizontal movement of the user input means parallel to a surface of the display unit and wherein, when a motion indicating the horizontal movement of the user input means is detected through the second sensor unit, the controller is configured to control to display the selected page.
